# EUROPEAN PATENT APPLICATION

(11) **EP 0 663 314 A1**
(43) Date of publication of application: **19.07.1995**
(21) Application number: 94309129.8
(22) Date of filing: 07.12.1994
(51) Int. Cl.: B60N 2/08, F16B 7/14

(54) **Locking device**

(30) Priority: 23.12.1993 GB 9326348
(71) Applicant: Dunlop Cox Ltd, Nottingham NG8 4GB (GB)
(72) Inventor: Christopher, Hugh Charles, West Bridgford, Nottingham (GB)
(74) Representative: Treves, Barry William

(57) **Abstract**

A locking device for a vehicle seat slide enabling the seat to be moved in a fore-and-aft direction but locked in any position between end limits.

The device comprises an elongated member (1) with tracks (51) on its outer surface (49) adapted to be fixed to the vehicle floor, and two tapered members (8,9) each encircling the member (1) fixed to the seat base. A ring of rollers (5,6), each preferably having a convex profile (i.e. barrel- shaped), is wedged between the tapered members (8,9) and the member (1), each roller (5,6) being associated with one of the tracks (51), to prevent movement. A release handle (7) causes the wedging force applied by a biassing device (a pair of springs) (20,21) to be removed and the seat is then capable of being moved to another position.

## Description

This invention relates to a locking device, and in particular to a locking device for a seat slide assembly capable of preventing movement of the seat in a fore-and-aft direction once its position has been chosen by the seat occupant.

A vehicle seat slide assembly such as that provided to allow the fore-and-aft adjustment of a vehicle seat typically comprises a first elongated slide member adapted to be fixed to the vehicle floor and a second elongated slide member adapted to be attached to and carry the vehicle seat, the second member being slidably engaged with the first member. Bearings are provided between the two members to assist sliding. Conventionally two assemblies are provided, one on each side of the seat.

Various devices are known to allow the position of the second, moveable slide member to be chosen within limits by the seat occupant. Once in position the second, moveable slide member must be sufficiently well locked so that in a collision situation the second moveable slide member does not move relative to the first fixed member even if the collision causes a force of several times the weight of the seat occupant to be applied through the seat belt anchorage attached to the second member and/or if the members suffer distortion in the collision. Many prior art slide assemblies comprise a plurality of notches on the first, fixed member which are engaged by one or more teeth of a manually operated spring-loaded trigger member mounted on the second, moveable member. However such assemblies only allow the second, movable member to be moved to one of a plurality e.g. eight, spaced apart positions relative to the first, fixed member.

GB Patents 772203 and 1067133, and Published European Application No. 540252 each describe a locking device for locking a member longitudinally with respect to a tube or rod having a circular cross-section outer surface, comprising a pair of tapering surfaces fixed to or forming part of the member to surround the tube or rod, the tapering surfaces being spaced apart longitudinally with respect to the member and arranged with the taper angle on one surface in the opposite sense to the other tapering surface, two sets of spherical balls each respectively associated with one of the two tapering surfaces, the balls of each set being positioned around and in contact with the circular cross-section outer surface of the tube or rod, spring means to force the balls into position where they are wedged against the associated tapering surfaces to prevent movement of the member relative to the tube or rod, and release means operable to move the balls against the force applied by the spring away from the associated tapering surfaces and allow movement of the member relative to the tube or rod.

It has been found that in use, the balls not only press against the outer surface of the tube or rod but, because of the small area of contact between each ball and the outer surface, cause considerable indentation and wear. The device quickly ceases to function correctly.

It is an object of the present invention to provide a locking device which does not suffer from or suffers less from the above disadvantage. Further, the device is particularly suitable for a vehicle seat slide, wherein the movable member can be positioned at any position relative to the fixed member between extreme limits i.e. is infinitely adjustable between said limits and once located will not move relative to the fixed member in a collision situation.

In accordance with the invention a locking device for locking a second member normally moveable longitudinally with respect to a first elongated member comprises a pair of tapering surfaces fixed to the second member to surround the first member, the tapering surfaces being spaced apart longitudinally with respect to the first member and arranged with the taper angle of one tapering surface in the opposite sense to the taper angle of the other tapering surface, two sets of rollers each respectively associated with one of the two tapering surfaces, the rollers of each set being positioned around the second member, each roller being in contact across the width thereof with a track having a shape complementary to that of the roller, the track being on the outer surface of the first member, biassing means to force the rollers into positions where they are wedged against the associated tapering surfaces across the widths thereof to prevent movement of the second member relative to the first member, and release means operable to move the rollers against the force applied by the biassing means away from the associated tapering surfaces and hence allow movement of the second member relative to the first member.

Preferably a plurality of tracks are provided, spaced apart around the outer surface of the first member, the number of tracks equalling the number of rollers in a set.

Preferably the release means comprises a tubular component slideably movable on the first member.

Preferably the biassing means comprises a helical spring positioned generally coaxially around the first member acting against an abutment surface associated with the second member. Each set of rollers may be positioned in a cage and the helical spring biassing means acts against the cage.

The invention further includes a seat slide assembly comprising a locking device as described above.

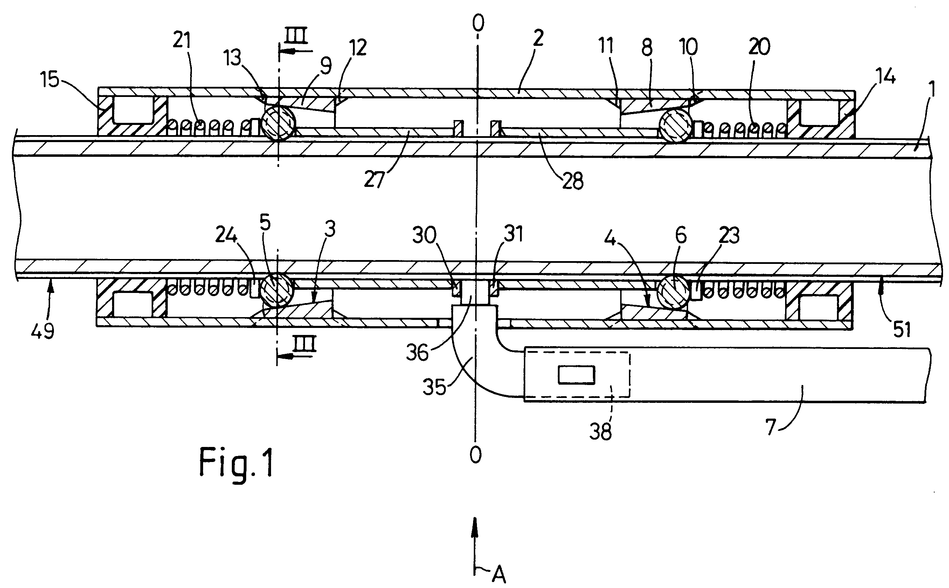

One embodiment of the invention, a locking device for a vehicle seat slide assembly, will now be described by way of example only with reference to the accompanying drawings of which;-
Figure 1 is a longitudinal horizontal cross-section through the device;
Figure 2 is a scrap side view on arrow 8 of the device shown in Figure 1; and
Figure 3 is a partial cross-section on line III-III of Figure 1.

The device comprises a first elongated tubular member 1 of expanded aluminium alloy and capable of being fixed to the vehicle floor in a fore-and-aft direction, a second tubular member 2 capable of moving longitudinally with respect to the first member, two rings 8,9 with internal tapering surfaces 4,3 fixed to the second member 2, two sets of convex rollers 5,6 associated respectively with the two tapering surfaces 3,4, and a release handle 7. The second member is adapted to carry the vehicle seat.

The second member 2 comprises a length of aluminium alloy or steel tube arranged coaxially to encircle the first member 1. Two annular end stops 14,15, one at each end of the second member are arranged to fit between the two members 1, 2. The stops 14, 15 are fixed to the second member 2 but capable of sliding along the first member 1. Conveniently the stops are each made of a polymeric (plastics) material e.g. suitable material nylon, polypropylene, or of metal coated on the surface which engages the first member 1 with a low-friction material such as polytetrafluoroethylene.

Positioned on the interior surface of the second member 2 and symmetrically with respect to the plane of symmetry 0-0 of the device between the end stops 14,15, are two hard steel rings 8,9 each respectively having tapering surfaces 3,4. The rings 8,9 are spaced apart from one another and from the end stops 14,15 longitudinally with respect to the two members. The rings 8,9 are fixed to the second member 2 by means of dimples or tangs 10,11,12,13 formed on each side of each ring 8,9. The taper angle of one tapering surface 3 is in the opposite sense with respect to the taper angle of the other tapering surface 4. Thus the internal diameter of each ring 8,9 is smallest on the side of the ring closer to the plane of symmetry 0-0 and largest on the side away from the said plane.

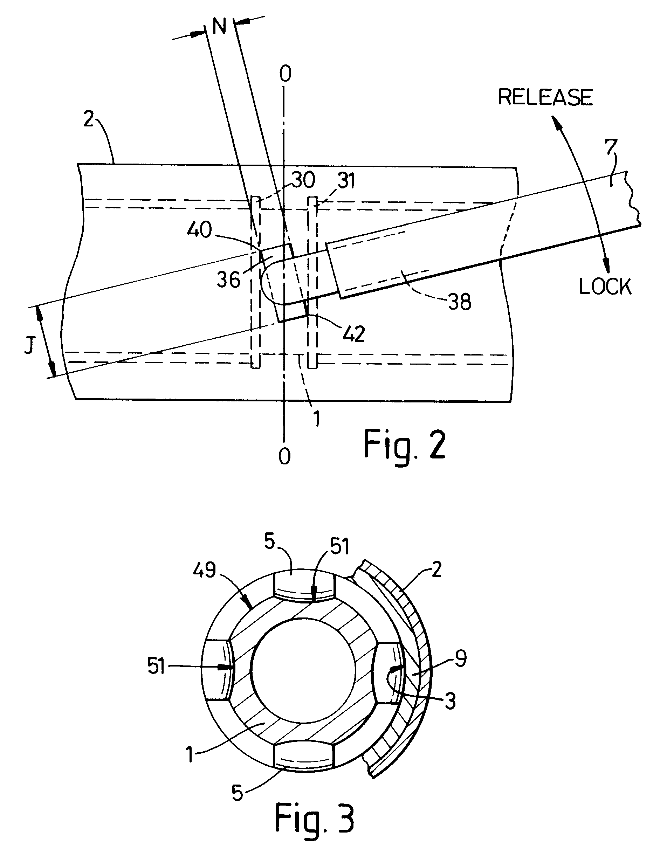

Arranged in the annular spaces radially inwards of the two tapering surfaces 3,4 are two sets 5,6 of hard steel convex rollers, four rollers to a set and one set being associated with each surface respectively. The rollers 4,5 are positioned in tracks 51 formed on the outer surface of the second member 2, the concave curvature of the tracks 51 being complementary to the convex curvature of the rollers 4,5 in a plane containing the rolling axis of the rollers. The surface of each roller is thus in contact with the associated track over the whole of its axial width, providing a relatively large area of contact. The maximum diameter of the rollers is such that they wedge between the concave surface of the track in which they are situated on the first member 1 and their associated tapering surface 3 or 4. Each set of rollers is positioned in a suitable cage 23, 24 so that the four rollers in each set are retained in the tracks which are equally spaced apart around the circumference of the first member 1. The concave curvature of the roller surface in a plane containing the rolling axis is complementary to the concave curvature of the tapering surfaces as can be seen in Figure 3. Thus the surface of each roller is in contact with the associated tapering surface across the whole of its axial width, thus providing a relatively large area of contact.

Positioned respectively between each cage and the nearer end stop 14,15 so as to encircle the first member 1 coaxially are two helical springs 20,21, one spring 20 being positioned between one end stop 14 and one cage 23 and the other spring 21 being positioned between the other end stop 15 and the other cage 24. The springs 20,21 are arranged to be in compression so that a biassing force acts against the cages 23, 24 at all times to press the rollers therein against the associated tapering surface 3 or 4. Thus the two sets of rollers 5,6 are wedged between the two tapering surfaces and the facing tracks on the surface of the first member 1 and prevent unwanted movement of the second member 2 longitudinally with respect to the first member.

A release means is provided to enable the seat occupant to unlock the device and hence allow the position of the second member 2 to be adjusted relative to the first member 1 in a fore-and-aft direction. The release means comprises a pair of steel tubes 27,28 arranged coaxially on the first member 1. Each steel tube 27 or 28 is slidable simultaneously on the first member 1 outwards with respect to the plane of symmetry 0-0 so that their outer edges contact the two sets of rollers 5,6 and move them outwards against the biassing force applied by the two helical springs 20,21.

Positioned in a hole formed in the second member is an L-shaped rod 35 having a generally rectangular projection 36 formed on one end face of one of its two limbs and arranged to abut the first member 1. As can be seen in Figure 2 the projection has two diagonally opposed corners 40,42 each of which abuts a respective washer 30,31 which is positioned to surround the first member in contact with the inner end of the associated steel tube 27 or 28. The projection 36 has its two longer edges extending at right angles to the length of the handle 7. Their length J is greater than the width of the rod which forms part of the handle. The shorter edges have lengths N less than the rod width. The other limb 38 of the rod extends at right angles to the limb having the projection 36 and fits inside a tubular part of the handle 7 lying alongside the second member 2. Normally the handle 7 lies parallel to the two members 1,2 in a generally horizontal position, the second member 2 being locked relative to the first member 1. Movement of the handle from a horizontal, locked position towards the vertical, released position rotates the rod 35 and in particular the projection 36. The two corners 40,42 contact the washers 30,31 to cause them to move apart i.e. away from the plane of symmetry 0-0. When the handle is vertical the washers are spaced apart by their maximum distance i.e. by the length J of the longer edges of the rectangular projection 36. This movement of the washers 30,31 causes the two tubes 27, 28 and the rollers 5,6 at the opposite end of the tubes to the washers to move against the spring biassing and out of contact with the tapering surfaces 3,4. The seat occupant may then reposition the seat carried on the second member 2 with respect to the first member 1 and once in the required new position, lock it in the new position by moving the handle 7 back to the horizontal position. This allows the two springs 20,21 to move the cages 23,24, the sets of rollers 5,6, the steel tubes 27,28 and the washers 30,31 towards the plane of symmetry 0-0. In this horizontal position of the handle the distance between the washers 30,31 is equal to the length N of the shorter edges of the rectangular projection 36.

The use of rollers, particularly rollers each having a convex surface in a plane containing the rolling axis of the roller, and complementary surfaces in the tracks and on the rings 8,9 provides much greater areas of contact compared with spherical balls acting on a cylindrical surface as in the devices described in the aforementioned prior publications. As a result unwanted indentation does not occur, and wear is very much reduced. Further the locking forces are increased.

Preferably two locking devices are provided, one for each side of the seat, linked together by a cable, rod, lever system or other mechanical linkage so that operation of the handle on one device operates the release mechanisms of both devices.

## Claims

1. A locking device for locking a second member (2) normally movable longitudinally with respect to a first elongated member (1) comprises a pair of tapering surfaces (3,4) fixed to the second member (2) to surround the first member (1), the tapering surfaces (3,4) being spaced apart longitudinally with respect to the first member (1) and arranged with the taper angle of one tapering surface (3) in the opposite sense to the taper angle of the other tapering surface (4), characterised by two sets of rollers (5,6) each respectively associated with one of the two tapering surfaces (3,4), the rollers (5,6) of each set being positioned around the second member, each roller (5 or 6) being in contact across the width thereof with a track (51) having a shape complementary to that of the roller (5 or 6), the track (51) being on the outer surface (49) of the first member (1), biassing means (20,21) to force the rollers (5,6) into positions where they are wedged against the associated tapering surfaces (3,4) across the widths thereof to prevent movement of the second member (2) relative to the first member (1), and release means (27,28) operable to move the rollers (5,6) against the force applied by the biassing means (20,21) away from the associated tapering surfaces (3,4) and hence allow movement of the second member (2) relative to the first member (1).

2. A locking device in accordance with Claim 1 characterised by comprising a plurality of tracks (51), spaced apart around the outer surface (49) of the first member (1).

3. A locking device in accordance with Claim 2 characterised in that the number of tracks (51) is equal to the number of rollers (5,6) in a set.

4. A locking device in accordance with any one of the preceding claims characterised in that each roller has a convex surface in a plane containing the rolling axis of the roller.

5. A locking device in accordance with any one of the preceding claims characterised in that each set of rollers (5 or 6) is positioned in a cage (23 or 24).

6. A locking device in accordance with Claim 5 characterised in that the biassing means (20 or 21) acts against the associated cage (23 or 24).

7. A locking device in accordance with any one of the preceding claims characterised in that the biassing means (20 or 21) comprises a helical spring positioned around the first member (1) acting against an abutment surface (14 or 15) associated with the second member (2).

8. A locking device according to any one of the preceding claims characterised in that the release means (27 or 28) comprises a tubular component slidably movable on the first member (1).

9. A locking device according to Claim 8 characterised by each comprising two tubular components (27,28) and a rectangular projection (36) positioned therebetween, the tubular components (27,28) being positioned to be moved apart against the force applied by the biasing means (20,21) by rotation of the rectangular projection (36).

10. A locking device according to Claim 9 characterised in that the projection (36) is formed on a rod (35) supported by the second member (2).

11. A locking device according to Claim 10 characterised by comprising a handle (7) secured to the rod (35), operation of the handle (7) enabling the projection (36) to be rotated.

12. A seat slide assembly characterised by comprising a locking device according to any one of the preceding claims.
